# EUROPEAN PATENT SPECIFICATION

(11) **EP 1 348 516 B1**
(45) Date of publication and mention of the grant of the patent: **01.02.2006**
(21) Application number: 03006493.5
(22) Date of filing: 21.03.2003
(51) Int. Cl.: B23Q 11/00, F04D 5/00

(54) **Apparatus and method for recirculating machine tool coolant and removing ferrous debris therefrom**
Vorrichtung und Verfahren für umlaufende Werkzeugmaschinenkühlmittel und Entfernen von Eisenabfallstoffen
Appareil et procédé de recirculation de réfrigérant de machine-outils et de séparation des débris ferreux

(30) Priority: 22.03.2002 US 366807 P
(43) Date of publication of application: 01.10.2003
(73) Proprietor: Filtra-Systems Company, Farmington Hills, MI 48335 (US)
(72) Inventor: Bratten, Jack R., Orchard Lake, Michigan 48324 (US)
(74) Representative: Schaumburg, Thoenes, Thurn, Landskron

(56) References cited:
- EP-A- 0 536 973
- EP-A- 1 122 024
- DE-B- 1 034 306

## Description

### Backgound of the Invention

This invention concerns the return of machine tool coolant to a filter apparatus. It is common practice in machine tool installations to collect the coolant draining from the cutting tools and the chips entrained therein in trenches or troughs extending below the machine tools, the drained coolant flowing down the trough to be collected in a sump from where it is pumped back to a filter apparatus.

As described in closest prior art document EP-A-1122 024, industry trends have resulted in quite shallow depth above grade troughs being used to collect the coolant and chips.

The lift apparatus described and claimed in that patent was invented by the inventor named in this application to enable coolant in shallow streams to be lifted and collected in a tank so as to be able to be pumped to filter apparatus by a conventional pump.

Another problem has been encountered in such installations, in that relatively large steel or other ferrous metal objects occasionally fall into the trough, such as broken cutting tools, large bolts, or other machine parts, etc. These objects can cause damage to pumps, blockage in the piping, etc., particularly where aluminum chips are being generated and the equipment is designed to handle only aluminum turnings and chips.

The lift apparatus described in EP-A-1122024 is very effective at removing large objects from the trough along with the chips and coolant, and depositing the same in a collecting tank.

It has heretofore been proposed by the present inventor to use a chip shredder conveyor between the lift station and a collector tank to reduce the size of the chips prior to pumping the coolant and chips from the collector tank back to the filtration apparatus. These conveyors have the ability to chop the chips that often form to be of a smaller size to prevent blockages and to achieve improved performance of the filter equipment. However, such conveyors do not operate reliably, particularly when large balls of chip turnings are present, which sometimes occurs.

U.S. Patent No. 6,406,635 describes locating an inducer chopper in the inlet of a pump to chop the chips to a smaller size prior to pumping the same. This arrangement is limited in the size of objects which can be handled. The pump itself has a recessed impeller to avoid the wearing contact of chips with the impeller surfaces. This results in low pumping efficiency since it relies on induced vortices to create pumping action rather than direct pumping action by the impeller.

U.S. Patent 3,973,866 describes a chopper pump in which cutting edges on the impeller blades are used to cut particles in the pumped liquid, and also includes a rotary tool ahead of the impeller to slice larger solid particles prior to entering the pump.

Large steel objects present a hazard to such conveyors and pumps and the associated piping.

From document DE 10 34 306 B a magnetic separator is known that removes small ferromagnetic sludge pieces out of the tool coolant. These sludge pieces are contained in the tool coolant and are thus filtered out.

From EP-A-0 536 973 a grinding apparatus is known, in which a tool of tungsten carbide is processed. Tungsten carbide is faintly responsive to a magnetic filed and can be drawn out of suspension thereby. Thus, tungsten carbide sludge included in the tool coolant as suspension can be removed.

It is the object of the present invention to provide a method and apparatus for efficiently and reliably recirculating coolant liquids in which chips and occasionally present items of ferrous metal debris to filtration apparatus from a shallow depth flow of machining coolant with equipment which can operate for long periods without replacement.

It is a further object to provide a method for reliably removing ferrous debris contained in shallow streams of machine tool coolant.

These objects are solved by the features of the independent claims 1 and 6.

### Summary of the Invention

The above recited objects and other objects which will be understood upon a reading of the following specification and claims are achieved by causing the machine tool coolant with the entrained debris to be collected in an above grade tank to a great level than the depth of the coolant.

This is preferably done by the sweeping up the coolant and entrained debris in the shallow flowing stream to be slung over a weir edge by rotation of a wheel having tangential blades moving in the same general direction as the stream flow. An upwardly and reversely extending wall extends over the wheel to guide the movement of the coolant and entrained debris over the weir edge.

A discharge chute receives the coolant slung over the weir edge, redirecting the coolant to create a plunging flow of coolant against an upwardly facing magnetized body located below the level of the weir edge, the magnetized body upward facing surface impacted by the plunging coolant flow. The impingement of the coolant flow against the face of the magnetized body brings any ferrous debris items into contact with the surface and redirects the coolant into a collection tank having a sloping bottom extending to a lower well space. Any ferrous metal debris items impacting the magnetized body are captured by magnetic attraction therebetween to attract and hold the same.

The coolant and other nonferrous entrained debris is deflected by the magnetic body and cascades down into a collector tank having sloping walls leading to a bottom well space. A chopper pump having an impeller with cutting edges is mounted above the bottom well, and draws coolant and debris into a disintegrator tool which reduces the size of large debris such as turning balls, and subsequently cutting the nonferrous chip debris to smaller size by the cutter blades of the pump impeller. The chopper pump impeller is hardened to allow direct pumping contact with the coolant and chips to be able to efficiently pump the coolant and reduced size debris to a filter apparatus, where the coolant is filtered and returned to the machine tool installation for reuse.

### Description of the Drawings

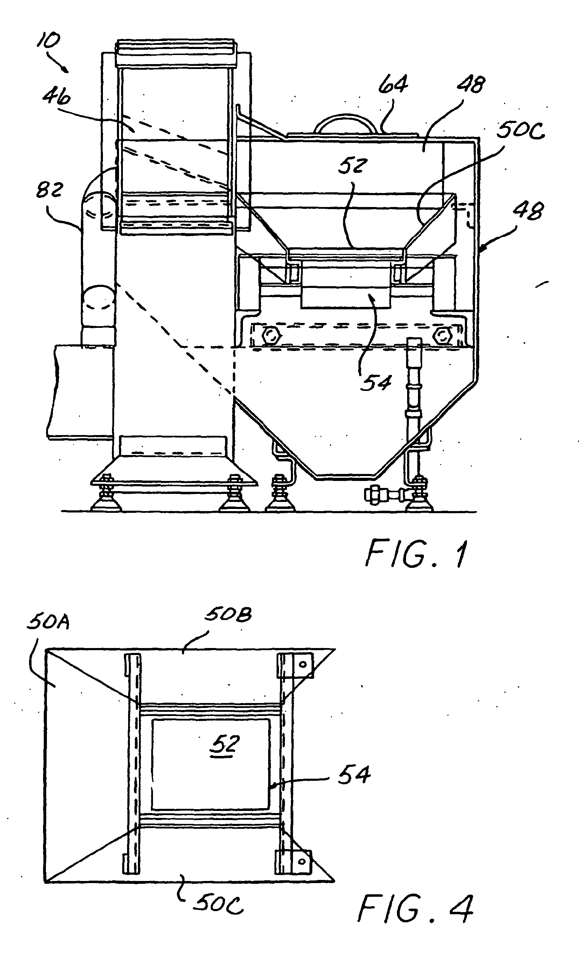

Figure 1 is an end view of an apparatus according to the present invention.

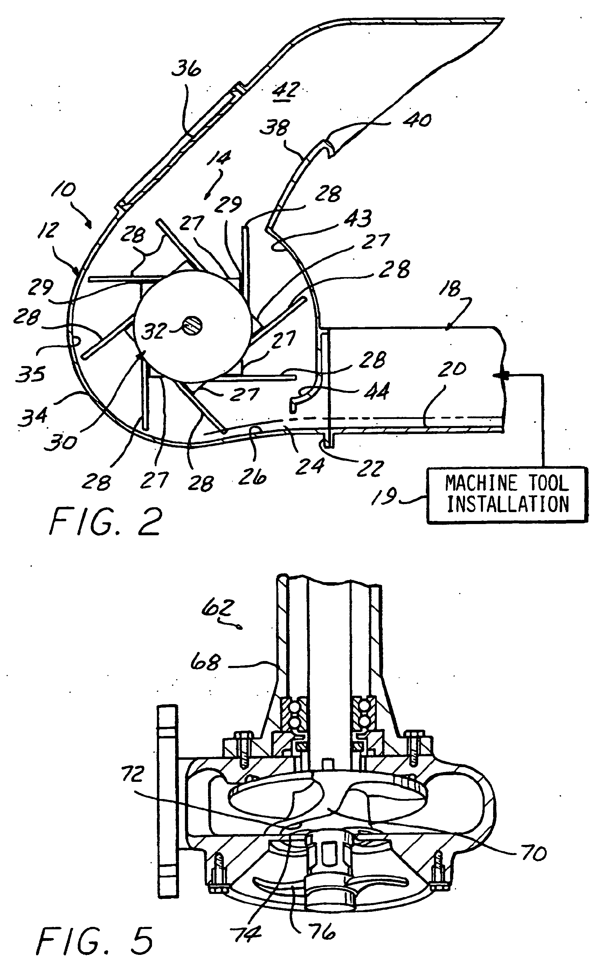

Figure 2 is a side elevational diagram of the lift station forming a part of the present invention.
Figure 3 is a side view of the lift station forming a part of the present invention.
Figure 4 is a normal detailed view of the magnetized body and shed plates shown in Figure 3.
Figure 5 is a partially broken away perspective view of the chopper pump shown in Figure 4.

### Detailed Description

In the following detailed description, certain specific terminology will be employed for the sake of clarity and a particular embodiment described in accordance with the requirements of 35 USC 112, but it is to be understood that the same is not intended to be limiting and should not be so construed inasmuch as the invention is capable of taking many forms and variations within the scope of the appended claims.

Referring to the drawing figures, the apparatus according to the present invention includes a lift station 10 as described in EP 1122024.

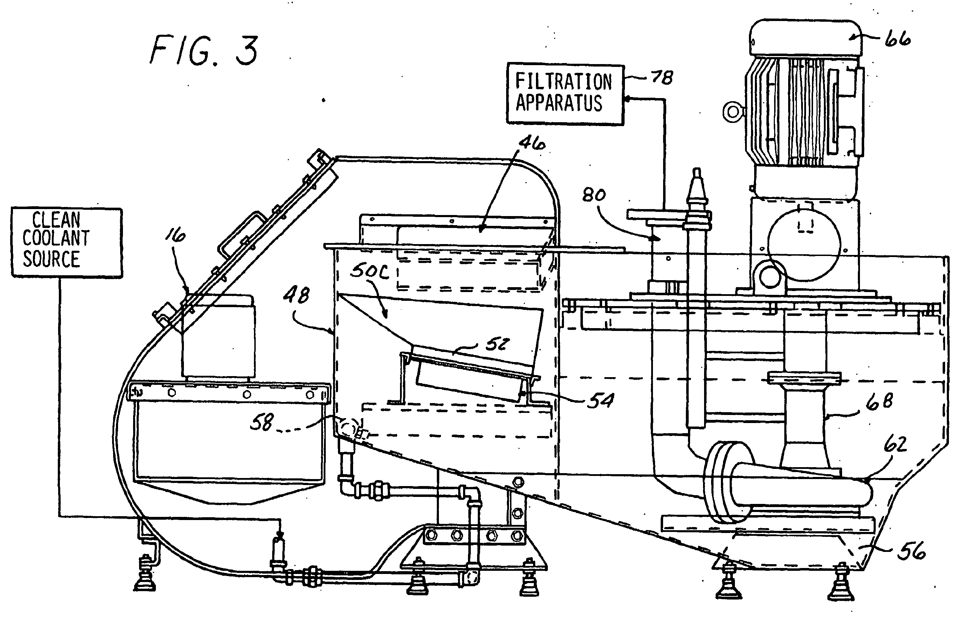

The coolant lift station 10 includes a housing 12 and a bladed wheel 14 rotatably mounted therein, driven by a motor 16 (Figure 3) and right angle drive (not shown).

The downstream end of a gravity trough 18 contains a shallow flowing stream of drained coolant collected from a machine tool installation 19. The gravity trough has a downwardly sloping bottom 20 and is connected to an inlet flange 22 at the right side of the housing 12.

The housing 12 has an inlet opening 24 receiving the coolant and entrained chips and other debris flowing in the shallow depth stream, typically only a few inches deep.

The bottom wall 26 of the housing 12 is also inclined downwardly to keep the coolant flowing into the housing interior, where a series of blades 28 are mounted to a hub here comprised of a drum 30 fixed on a rotatable axle shaft 32.

The blades 28 are welded or bolted to angle pieces 27 welded to the drum 30, optionally having interposed resilient sheets 29 in order to allow deflection when a large object enters the housing 12. The blades 28 may be constructed of ¼ of 25,4 mm (¼ inch) thick sheet steel to be substantially rigid. Alternatively, thinner gauge spring steel or blue steel material can be used which will be deflectable without the interposed resilient sheets 29 to achieve the same result.

The blades 28 extends outwardly from the drum 30, in a direction tangential to the axis of rotation defined by the axle 32, and in a direction opposite to the direction of rotation, i.e., are backwardly raked to be oriented in a trailing direction. The backward rake of the blades 28 is believed to assist in obtaining improved upward slinging of the coolant and entrained debris from the blades 28 as they accelerate the coolant by the development of centrifugal force to a velocity sufficient to reach a weir edge 40.

Since there is an inherent unequal distribution of coolant being moved by the various blades 28, it has been found that reasonably smooth rotation is achieved by a set of eight blades as shown, although fewer or more could be used.

The blades 28 are shaped in close conformity to the cross sectional shape and size of the housing 12, i.e., in this embodiment the blades are rectangular about 609,6 mm (24 inches) wide, with only minimal edge clearances, i.e., on the order of ⅛th of 25,4 mm (⅛th of an inch) between the sides and ends and the adjacent trough walls. The cross sectional shape of the housing 12 in turn is generally matched to that of the trough 18.

Collection troughs 18 are typically square or rectangular in cross sectional shape due to the lack of available clearance in order to maximize flow area.

The housing 12 curves upwardly from the bottom wall 26 to a radiused rear wall 34, extending above the level of the shaft 32, which extends into an upwardly and backwardly extending segment 36 (which can also incorporate a removable access panel as shown). The inner surface 35 of the wall 34 follows the path of the outer edges of the blades 28 as the wheel 14 rotates.

The panel segment 36 and an opposite segment 38 define an exit chute 42 extending to a weir edge 40 over which coolant and debris are slung by rotation of the blades 28, weir edge 40 at a height well above the level of the trough bottom 20 and housing bottom 26.

The backward inclination of the outlet chute 42 extending back towards the front of the housing 12 is necessary to be generally aligned with the direction that the coolant is thrown off the blades 28 by rotation of the bladed wheel 14, as a forward inclination defeats upward flow of the coolant even with increased rotational speed. That is, coolant will be thrown backwardly when coming off the blades 28.

A certain minimum speed is necessary greater than the velocity of the flow stream, depending on the lift height required, an outer edge speed of 12-15 times 30, 48 cm (12-15 feet) per second having been found to be sufficient for the application described.

The rotating trailing blades 28 overtake the coolant flowing in from the trough 18 and down the inclined housing bottom 26, and sweeps the coolant forward. This is accomplished without even any momentary interruption of the coolant flow in the trough 18 which could cause the chips to settle out and pile up, causing a rapid build up which might not be cleared away when flow resumes.

Initially, the inertia of the coolant causes it to be moved inward along the blade forward surface, i.e., radially inwardly. To limit the extent of this radially inward flow, a large diameter drum 30 is desirable rather than a small diameter shaft. As the coolant captured by the blade 28 is accelerated, centrifugal force subsequently causes radially outward movement of the coolant at an increasing velocity until achieving sufficient outward momentum so as to be slung from the blade 28 in the approximate direction in which the chute 42 extends, i.e., opposite the direction of inflow of coolant into the housing 12, passing over the weir edge 40. The trailing orientation of the blades 28 is believed to assist in slinging of the coolant and chips off the blades 28 in the approximate direction in which the chute 42 extends, i.e., opposite the direction of inflow of coolant into the housing 12, passing over the weir edge 40. The trailing orientation of the blades 28 is believed to assist in slinging of the coolant and chips off the blades 28 in an upward direction.

A forward housing wall 43 extends downwardly and then curves forwardly at its terminal lip 44.

Any slung coolant which does not reach and pass over the weir edge 40 drains down the forward wall 43 and is redirected towards the direction of the stream inflow, with momentum added in the forward direction of rotation of the blades 28, such as to be more likely to achieve sufficient upward momentum when again thrown off the blades 28 so as to reach the weir edge 40.

Coolant and entrained debris passing over the weir edge 40 enters a redirection discharge chute 46 extending at right angles to be directed into a collection tank 48 disposed alongside. The collection tank 48 has a series of inclined shed plates 50A, B, C as shown in Figure 4 funneling the discharged coolant, chips and other debris in a plunging flow cascading onto the upper face 52 of a magnetized body 54 disposed at the bottom of the shed plates 50A, B, C.

The magnetized body 54 is preferably constructed of a rare earth material to create a very strong magnetic attraction on any ferrous metal item entrained in the plunging coolant, thereby brought into contact with the face 52 thereof. Face 52 is inclined at a shallow angle (≈ 10°) to the right as viewed in Figure 3. The coolant and other debris is redirected to the right which is open to allow the coolant to cascade down into the collection tank proper 48, flowing down the sloping bottom wall to a well space 56 at the right in Figure 3.

Any ferrous metal items impacting the face 52 are momentarily arrested at the face 52, which allows the strong magnetic field of the body 54 to capture and securely retain the same. A trap door 64 may be provided for periodic removal of such items.

A washer jet manifold 58 may be mounted at the upper side of the collector tank bottom wall 60 supplied with pressurized clean coolant, spraying down the bottom wall 60 to prevent the accumulation of chips or other debris.

Mounted above the well space 56 is a chopper pump 62, driven by an electric motor 66 mounted above the tank 48 and connected by an oil filled tubular housing 68 to the pump. The chopper pump 62 is of a particular design available from Vaughan Co., Inc. Of Montesano, Washington, USA. This designed features an impeller 70 (Figure 5) of hardened (60 Rockwell C) alloy steel (A5TM A148) which impeller has cutting edges 72 rotated past a cutter bar 74. In addition, a disintegrator tool 76 is mounted to rotate with the impeller 70 to agitate and break up chips and/or other debris prior to entering the pump. Vaughan pump model VSM-080 has been successfully employed for this purpose.

The aluminum chips are easily chopped up by such pump which also efficiently pumps the coolant to the back to the filtration apparatus 78 via an outlet 80.

Chip balls and tangles are easily handled by the agitator tool, which also captures and forces the same into the pump chamber to be cut up by the impeller cutting edges.

The impeller preferably spaced above the bottom of the well space 56 in order to reduce the suction to avoid sucking large objects into the pump 62.

An emergency overflow connection 82 can be provided to return coolant to the trough 18.

## Claims

1. Apparatus for recirculating machine tool coolant and entrained debris flowing in a shallow depth stream within a flow channel to a filtration apparatus (78), said apparatus comprising:
a housing (12) having an inlet opening (24) connected to a channel to receive said flowing stream of coolant onto a bottom wall (26) of said housing (12);
a bladed wheel (14) rotatably mounted within said housing (12) and a drive motor (16) for rotating said bladed wheel (14) therein;
said bladed wheel (14) having a plurality of outwardly extending blades (28) attached to a hub structure (32), said blades (28) generally conforming to the cross sectional shape of an interior shape in said housing (12) receiving said stream of flowing coolant and rotated in the same direction of said stream flow, said blade (28) each having an outer edge passing over said bottom surface (35) and sweeping said coolant in said stream therealong;
said housing interior space defined by a wall surface curving upwardly along the path which said outer edges of each of said blades (28) move so as to enable coolant to be swept therealong and upwardly by rotation of said bladed wheel (14);
said upwardly curving surface extending to a rearwardly and upwardly extending exit wall having a weir edge (48) defined at an upper region thereof, coolant slung over said weir edge (40) entering a discharge chute (42) ; said bladed wheel (14) rotated by said drive motor (16) to achieve sufficient blade velocity to sweep coolant upwardly and to sling said coolant up said exit wall, over said weir edge (40) and to said discharge chute (42);
**characterized by**
a magnetized body (54) disposed at a lower level below said discharge chute (42) to receive descending coolant and debris so as to bring ferrous debris into contact therewith to be captured thereon by magnetic attraction;
a collection tank (48) receiving coolant flowing off said magnetized body (54);
a pump (62) associated with said collection tank (48) causing coolant and remaining debris collected in said collection tank (48) to be circulated to said filtration apparatus (19),
wherein said pump (62) comprises a chopper pump having an impeller (70) formed with cutting edges (72) cutting up entrained debris drained within a pump casing enclosing said impeller (70).

2. The apparatus according to claim 1 wherein said pump (62) further includes an agitator tool (76) attached to said impeller (70) to rotate therewith and located to break up debris prior to entering said pump casing.

3. The apparatus according to claim 1 wherein said magnetized body (54) is mounted to present an inclined surface (52) against which said debris and entrained coolant plunges to bring any ferrous debris items therein into contact therewith.

4. The apparatus according to claim 1 wherein said magnetized body (54) is a rare earth magnet.

5. The apparatus according to claim 1, further including a series of shed plates (50A, 50B, 50C) mounted around said magnetized body (54) so as to direct coolant and entrained debris from said discharge chute (42) onto an upper surface (52) of said magnetized body (54).

6. A method of recirculating drained machine tool coolant flowing in a stream to a filter apparatus (78) including the step of removing entrained ferrous debris in a stream of machine tool coolant flowing down a collection trough extending beneath a machine tool installation (19) to collect machine tool coolant and aluminum chips, by the steps of:
guiding said flowing coolant stream into a housing (12) having a bottom surface (26) configured to receive said coolant stream;
successively sweeping each of a plurality of blades (28) into said coolant flow stream to sweep coolant and debris along said housing bottom surface (26) and up a curving wall surface (35); sweeping said coolant and chips from said blades (28) upwardly and back into an exit chute (42), and over a weir edge (40) located in said exit chute (42); and
directing said coolant and entrained debris passing over said weir (40) down onto an upper surface (52) of a magnetized body (54) so as to bring any ferrous debris into direct contact with said magnetized body (54) to insure capture thereof by magnetic attraction; and,
collecting coolant flow flowing off said magnetized body (54) in a collection tank (48) within which said magnetized body (54) is disposed,
and further including the step of pumping said collected machine tool coolant back to said filter apparatus (78) by a chopper pump (62) disposed in said collection tank (48), said chopper pump (62) having an impeller (70) with cutting edges (72) cutting up remaining debris in said coolant as said coolant and remaining debris is pumped out of said collection tank (48).

## Patentansprüche

1. Vorrichtung zum Rezirkulieren von Werkzeugmaschinenkühlmittel und mitgeführtem Abfall, die in einem Strom mit geringer Tiefe innerhalb eines Flusskanals zu einer Filtrationsvorrichtung (78) fließen, wobei diese Vorrichtung umfasst:
ein Gehäuse (12) mit einer Einlassöffnung (24) verbunden mit einem Kanal zur Aufnahme des Flussstroms von Kühlmittel auf eine untere Wand (26) des Gehäuses (12);
ein drehbar in dem Gehäuse (12) montiertes Schaufelrad (14) und ein Antriebsmotor (16) zum Drehen des darin befindlichen Schaufelrads (14);
das Schaufelrad (14) mit mehreren nach außen hin abstehenden Schaufeln (28), die an einer Nabenstruktur (32) befestigt sind, wobei die Schaufeln (28) im Allgemeinen der Querschnittsform einer Innenform des Gehäuses (12) entsprechen, das den Strom fließenden Kühlmittels aufnimmt und in die gleiche Richtung wie der Stromfluss gedreht ist, wobei die Schaufeln (28) jeweils eine Außenkante haben, die sich über die untere Oberfläche (35) bewegt und das Kühlmittel in dem Strom dort entlang befördert;
den Innenraum des Gehäuses, der durch eine Wandoberfläche gebildet ist, die sich entlang der Bahn nach oben krümmt, auf der sich die Außenkanten der jeweiligen Schaufeln (28) bewegen, damit das Kühlmittel durch Drehen des Schaufelrads (14) dort entlang und nach oben geführt werden kann;
die nach oben gekrümmte Oberfläche, die zu einer rückwärts und aufwärts abstehenden Austrittswand hin absteht, wobei die Austrittswand eine in ihrem oberen Bereich gebildete Wehrkante (40) hat, das über die Wehrkante (40) geschleuderte Kühlmittel in eine Austrittsrinne (42) eintritt, das Schaufelrad (14) zum Erreichen einer hinreichenden Schaufelgeschwindigkeit durch den Antriebsmotor (16) gedreht wird, um das Kühlmittel nach oben zu befördern und das Kühlmittel die Austrittswand hinauf über die Wehrkante (40) hin zu der Austrittsrinne (42) zu schleudern;
**gekennzeichnet durch**
einen an niedrigerer Stelle unter der Austrittsrinne (42) angeordneten magnetisierten Körper (54) zum Aufnehmen von herunter fließendem Kühlmittel und Abfall, damit eisenhaltiger Abfall damit in Kontakt gebracht wird, um durch magnetische Anziehung darauf aufgefangen zu werden;
einen Sammeltank (48) zum Aufnehmen von Kühlmittel, das von dem magnetisierten Körper (54) herab fließt;
eine zu dem Sammeltank (48) zugehörige Pumpe (62), die bewirkt, dass Kühlmittel und verbleibender Abfall in dem Sammeltank (48) zu der Filtrationsvorrichtung (19) hin zirkulieren,
wobei die Pumpe (62) eine Schneidepumpe mit einem Pumpenrad (70) umfasst, das mit Schneidekanten (72) gebildet ist, die in einem Pumpengehäuse, einschließlich dem Pumpenrad (70), entwässerten und mitgeführten Abfall schneiden.

2. Vorrichtung nach Anspruch 1, wobei die Pumpe (62) ein Betätigerwerkzeug (76) einschließt, das an dem Pumpenrad (70) befestigt ist um sich damit zu drehen, und das derart angeordnet ist, dass Abfall vor Eintreten in das Pumpengehäuse zerkleinert wird.

3. Vorrichtung nach Anspruch 1, wobei der magnetisierte Körper (54) derart montiert ist, dass eine schräge Oberfläche (52) vorliegt, auf die der Abfall und das mitgeführte Kühlmittel auftreffen, um jegliche eisenhaltige Abfallelemente darin in Kontakt damit zu bringen.

4. Vorrichtung nach Anspruch 1, wobei der magnetisierte Körper (54) ein Seltenerdmagnet ist.

5. Vorrichtung nach Anspruch 1, ferner einschließend eine Reihe von um den magnetisierten Körper (54) herum montierten Flügelplatten (50A, 50B, 50C), um Kühlmittel und mitgeführten Abfall von der Austrittsrinne (42) auf eine obere Oberfläche (52) des magnetisierten Körpers (54) zu leiten.

6. Verfahren zum Rezirkulieren von entwässertem Werkzeugmaschinenkühlmittel, das in einem Strom zu einer Filtervorrichtung (78) fließt, einschließlich dem Schritt des Entfernens von mitgeführtem eisenhaltigen Abfall aus einem Strom von Werkzeugmaschinenkühlmittel, das an einer unter einer Werkzeugmaschinenanordnung (19) herausstehenden Sammelwanne herab fließt, um Werkzeugmaschinenkühlmittel und Aluminiumspäne zu sammeln, durch die folgenden Schritte:
Führen des fließenden Kühlmittelstroms in ein Gehäuse (12), dessen untere Oberfläche (26) zur Aufnahme des Kühlmittelstroms ausgebildet ist;
allmähliches Bewegen einer jeden von mehreren Schaufeln (28) in den Kühlmittelflussstrom, um Kühlmittel und Abfall entlang der unteren Gehäuseoberfläche (26) zu führen und eine gekrümmte Wandoberfläche (35) hinauf, wobei Kühlmittel und Späne von den Schaufeln (28) nach oben befördert werden und zurück in eine Auslaufrinne (42) und über eine in der Auslaufrinne (42) angeordnete Wehrkante (40); und
Leiten des Kühlmittels und des mitgeführten Abfalls zum Bewegen über das Wehr (40) und hinunter auf eine obere Oberfläche (52) eines magnetisierten Körpers (54) um jeglichen eisenhaltigen Abfall in direkten Kontakt mit dem magnetisierten Körper (54) zu bringen, zum Sicherstellen, dass er durch magnetische Anziehung aufgefangen wird; und
Sammeln des Kühlmittelflusses, der von dem magnetisierten Körper (54) herab fließt, in einem Sammeltank (48), in dem der magnetisierte Körper (54) angeordnet ist,
und ferner einschließend den Schritt des Zurückpumpens von dem gesammelten Werkzeugmaschinenkühlmittel zu der Filtervorrichtung (78) durch eine in dem Sammeltank (48) angeordnete Schneidepumpe (62), wobei die Schneidepumpe (62) ein Pumpenrad (70) mit Schneidekanten (72) hat, die verbliebenen Abfall in dem Kühlmittel schneiden, wenn das Kühlmittel und der verbliebene Abfall aus dem Sammeltank (48) herausgepumpt werden.

## Revendications

1. Appareil permettant de recycler le fluide de refroidissement d'une machine-outil ainsi que les débris entraînés circulant dans un flux à faible profondeur, à l'intérieur d'un canal d'écoulement, vers un appareil de filtration (78), ledit appareil comprenant :
un boîtier (12) ayant une ouverture d'entrée (24) reliée à un canal afin de recevoir ledit flux en circulation de fluide de refroidissement sur une paroi inférieure (26) dudit boîtier (12) ;
une roue à aubes (14) montée de manière rotative à l'intérieur dudit boîtier (12), et un moteur d'entraînement (16) permettant de faire tourner ladite roue à aubes (14) à l'intérieur ;
ladite roue à aubes (14) ayant une pluralité d'aubes (28) s'étendant vers l'extérieur, fixées à une structure de moyeu (32), lesdites aubes (28) correspondant généralement à la forme en coupe transversale d'une forme intérieure dudit boîtier (12) recevant ledit flux de fluide de refroidissement en circulation, et tournant dans la même direction que ledit flux, lesdites aubes (28) ayant chacune un bord extérieur passant au-dessus de ladite surface de fond (35) et balayant ledit fluide de refroidissement dans ledit flux ;
ledit espace intérieur du boîtier défini par une surface de paroi incurvée vers le haut le long de la trajectoire de déplacement desdits bords extérieurs de chacune desdites aubes (28), afin de permettre au fluide de refroidissement d'être balayé le long et vers le haut sous l'effet de la rotation de ladite roue à aubes (14) ;
ladite surface incurvée vers le haut s'étendant vers une paroi de sortie s'étendant vers l'arrière et vers le haut, comportant une arête de déversoir (40) définie au niveau d'une région supérieure de celle-ci, le fluide de refroidissement ramassé au-dessus de ladite arête de déversoir (40) pénétrant dans une goulotte d'évacuation (42), ladite roue à aubes (14) tournant grâce audit moteur d'entraînement (16) pour obtenir une vitesse d'aube suffisante afin de balayer ledit fluide de refroidissement vers le haut et de remonter ledit fluide de refroidissement au niveau de ladite paroi de sortie, au-dessus de ladite arête de déversoir (40) et jusqu'à ladite goulotte d'évacuation (42) ;
**caractérisé par** :
un corps aimanté (54) disposé à un niveau bas en dessous de ladite goulotte d'évacuation (42) pour recevoir ledit fluide de refroidissement et les débris qui descendent de manière à amener les débris ferreux en contact avec celui-ci pour qu'ils soient piégés sous l'effet de l'attraction magnétique ;
un réservoir de collecte (48) recevant le fluide de refroidissement s'échappant dudit corps aimanté (54) ;
une pompe (62) associée audit réservoir de collecte (48), amenant le fluide de refroidissement et les débris résiduels collectés dans ledit réservoir de collecte (48) à circuler vers ledit appareil de filtration (78) ;
dans lequel ladite pompe (62) comprend une pompe de hachage comportant une turbine (70) dotée de bords de coupe (72) découpant les débris entraînés évacués à l'intérieur d'un carter de pompe renfermant ladite turbine (70).

2. Appareil selon la revendication 1, dans lequel ladite pompe (62) inclut en outre un outil agitateur (76) fixé sur ladite turbine (70) de façon à tourner avec celle-ci, et agencé afin de fractionner les débris avant leur pénétration dans ledit carter de pompe.

3. Appareil selon la revendication 1, dans lequel ledit corps aimanté (54) est agencé de manière à présenter une surface inclinée (52) que heurtent lesdits débris et ledit fluide de refroidissement entraîné afin de mettre tout débris ferreux contenu dans celui-ci en contact avec celle-ci.

4. Appareil selon la revendication 1, dans lequel ledit corps aimanté (54) est un aimant de terres rares.

5. Appareil selon la revendication 1, comprenant en outre une série d'ailettes (50A, 50B, 50C) montées autour dudit corps aimanté (54) de manière à diriger le fluide de refroidissement et les débris entraînés depuis ladite goulotte d'évacuation (42) vers une surface supérieure (52) dudit corps aimanté (54).

6. Procédé de recyclage d'un fluide de refroidissement de machine-outil évacué, circulant sous forme de flux vers un appareil filtrant (78), incluant l'étape consistant à enlever les débris ferreux entraînés dans un flux de fluide de refroidissement de machine-outil descendant vers un bac de collecte, s'étendant en dessous d'une installation de machine-outil (19), afin de récupérer le fluide de refroidissement de machine-outil et les copeaux d'aluminium, **caractérisé par** les étapes consistant à :
guider ledit flux de fluide de refroidissement en circulation dans un boîtier (12) ayant une surface de fond (26) configurée de manière à recevoir ledit flux de fluide de refroidissement ;
successivement balayer ledit flux de fluide de refroidissement à l'aide de chacune de la pluralité d'aubes (28) afin de balayer le fluide de refroidissement et les débris le long de ladite surface de fond du boîtier (26) et jusqu'à une surface de paroi incurvée (35) ; balayer ledit fluide de refroidissement et les copeaux à partir desdites aubes (28) en les remontant vers le haut et les ramener dans une goulotte de sortie (42), en passant au-dessus d'une arête de déversoir (40) agencée dans ladite goulotte de sortie (42) ; et
diriger ledit fluide de refroidissement et les débris entraînés, passant au-dessus dudit déversoir (40), vers le bas sur une surface supérieure (52) d'un corps aimanté (54) de manière à mettre tout débris ferreux en contact direct avec ledit corps aimanté (54) afin de garantir qu'il est piégé sous l'effet de l'attraction magnétique ; et
collecter le flux de fluide de refroidissement s'échappant dudit corps aimanté (54) dans un réservoir de collecte (48) à l'intérieur duquel ledit corps aimanté est disposé ;
et
incluant en outre l'étape consistant à pomper de nouveau ledit fluide de refroidissement de machine-outil collecté vers ledit appareil filtrant (78) à l'aide d'une pompe de hachage (62) disposée dans ledit réservoir de collecte (48), ladite pompe de hachage (62) comportant une turbine (70) avec des bords de coupe (72) découpant les débris résiduels dans ledit fluide de refroidissement à mesure que ledit fluide de refroidissement et les débris résiduels sont évacués, par pompage, dudit réservoir de collecte (48).
